# EUROPEAN PATENT APPLICATION

(11) **EP 2 051 502 A1**
(43) Date of publication of application: **22.04.2009**
(21) Application number: 08253268.0
(22) Date of filing: 08.10.2008
(51) Int. Cl.: H04N 5/00, H04N 7/16

(54) **Receiving apparatus and receiving method**

(30) Priority: 15.10.2007 JP 2007267350
(71) Applicant: Hitachi Ltd., Chiyoda-ku Tokyo 100-8280 (JP)
(72) Inventor: Matsubara, Takashi, Tokyo 100-8220 (JP)
(74) Representative: Calderbank, Thomas Roger

(57) **Abstract**

For providing a receiving apparatus, having a function of enabling to receive two program information, and an input/output portion connectable with one descrambler so as to descramble the program information, which is coded appropriately, wherein a broadcast receiver (100) comprises a broadcast receiver portion A (101), a descrambler, a broadcast signal processor portion A (103), an audio processor portion A (104), a speaker (105), a video processor portion A (106), a display portion (107), a broadcast receiver portion B (108), a broadcast signal processor portion B (109), an audio processor portion B (110), a video processor portion B (111), and further a broadcast recording portion (112), wherein determination is made on the broadcast signal processor portion to pass through the descrambler, the audio processor portion and the video processor portion to be used for receiving/reproducing, and a recording signal processor portion for recording data into the broadcast recording portion (112), depending upon conditions of receiving/reproducing and recording, and also on whether the broadcast to be received is a scramble broadcast or not.

## Description

The present invention relates to a receiving apparatus for receiving a program signal, which contains a coded signal therein.

In the digital broadcast in Europe, the broadcast receiver has an interface between external equipments, which is called "Common Interface" (hereinafter, "CI"), to be connected with a CI card, which is supplied by the broadcasting business company, whereby Transport Stream (hereinafter, "TS") to be received on and the digital broadcast is received by the CI cart. Then, scramble of the TS is dissolved (i.e., descrambled) within the CI card, and the TS dissolving the scramble thereon is received, again, by the broadcast receiver, and thereby enabling to view the broadcast program scrambled, in the structures thereof. In such the structures, a number of TS is only one (1), which can pass through the descrambling.

On the other hand, in the following Patent Document 1 is disclosed a technology for determining on whether coding is made or not on the broadcast signal received, so as to conduct video processing upon the signal coded passing through a descrambler while the signal not coded without passing through the descrambler.
[Patent Document 1] Japanese Patent Laying-Open No. 2006-041848 (2006).

However, in case when recording two (2) scramble broadcast programs and viewing them, at the same time, while mounting two (2) sets of tuners, then two (2) sets of descramblers are necessary to be provided.

Further, in the Patent Document 1, there is disclosed the case where only one (1) set of tuner is provided, but no disclosure is made on the signal processing, in particular, when there are provided two (2) sets of tuners therein.

According to the present invention, accomplished by taking the drawbacks mentioned above into the consideration thereof, a preferred aim is to provide a receiving apparatus, having a function of receiving two (2) broadcast information and having an input/output portion, to which one (1) set of descrambler can be connected, in the structures thereof, wherein the broadcast information coded appropriately can be descrambled, thereby being superior in the usability or operability thereof for a user.

According to the present invention, there is provided a receiving apparatus, for receiving a program signal including a coded signal therein, comprising: a first receiver portion, which is configured to receive said program signal; a second receiver portion, which is configured to receive said program signal; an output portion, which is configured to output the program signal, which is received by said first receiver portion or said second receiver portion, to an external equipment; an input portion, which is configured to input a signal from said external equipment; a recording portion, which is configured to record said program signal; and a display portion, which is configured to display said program signal, wherein the program signal received by said second receiver portion is outputted to said external equipment, and the program signal inputted from said input portion is recorded in said recording portion, when said first receiver portion and said second receiver portion receive the coded program signal.

With the present invention mentioned above, it is possible to provide a receiving apparatus, having a function of receiving two (2) broadcast information and having an input/output portion, to which one (1) set of descrambler can be connected, in the structures thereof, wherein the broadcast information coded appropriately can be descrambled, thereby being superior in the usability or operability thereof for a user.

Those and other objects, features and advantages of the present invention will become more readily apparent from the following detailed description when taken in conjunction with the accompanying drawings wherein:
FIG. 1 is a block diagram for showing the structures of a broadcast receiver, according to an embodiment 1 of the present invention;
FIG. 2 is a block diagram for showing the condition of the broadcast receiver according to the embodiment 1, and also a route setting thereof;
FIG. 3 is a flowchart for showing the operation of the broadcast receiver according to the embodiment 1;
FIG. 4 is a flowchart for showing the operation of the broadcast receiver according to the embodiment 1;
FIG. 5 is a block diagram for showing the structures of a broadcast receiver, according to an embodiment 2 of the present invention; and
FIG. 6 is a flowchart for showing the operation of the broadcast receiver according to the embodiment 2.

Hereinafter, embodiments according to the present invention will be fully explained by referring to the attached drawings.

The embodiments according to the present invention relates to a broadcast receiver for enabling to receive/reproduce two (2) broadcasts, at the same time, and in particular, it relates to the broadcast receiver, with which a descrambler can be connected, for dissolving (or descrambling) the scramble of the scramble broadcast, wherein broadcast data dissolved (or descrambled) with the scramble within the descrambler is received, again, by that broadcast receiver, thereby enabling to receive/reproduce the broadcast data mentioned above, and further having a recording function of recording that broadcast data.

With the broadcast receiver, mounting therein at least two (2) sets or more of tuners, video decoders, and/or audio decoders, it is able for a user to view two (2) or more of programs, at the same time, and/or to record one of the programs while viewing other one, etc.

On the other hand, the broadcasting can be distributed through multi-channels, accompanying with developments of the broadcasting technologies, such as, satellite broadcasting and digital broadcasting, etc. , and there are a large number of channels, which are broadcasted for pay. Such charged broadcasts are scrambled, and it is common to connect a descrambler provided by the broadcasting business company with the television apparatus, thereby enabling the channel, upon which the contract is made, to be viewed, in the construction. In particular, with the digital broadcastingin Europe,a broadcast receiver comprisesaninterface between the external equipments, which is called "Common Interface" (hereinafter, "CI"), and a CI card provided by the broadcasting business company is connected to the CI, so as to transmit the Transport Stream (hereinafter, "TS") to be received through the digital broadcast, to the CI. Then, the scramble of the TS is dissolved (or descrambled) within the CI card, and the TS dissolved the scramble thereon (i.e., descrambled) is received by the broadcast receiver, so that the scramble broadcast can be viewed, in the structures thereof.

As was mentioned in the above, in case when receiving/reproducing the scramble broadcast with using the descrambler within the broadcast receiver, it is necessary to receive/reproduce the TS, which is received by the broadcast receiver, after passing it through the descrambler, however the number of TS, which can pass through the descrambler, is only one (1). Accordingly, within the broadcast receiver, mounting two (2) sets of tuners and/or decoders thereon, so as to enable viewing of two (2) broadcasts at the same time or recording one of programs while viewing the other, it is necessary to connect two (2) sets of descramblers, to pass the other TS through the respective descrambler, i.e., to dissolve the scramble (i.e., descrambling), in particular, when enabling the two (2) scramble broadcasts to be viewed at the same time, or when enabling one of the scramble broadcasts to be viewed and the other scramble broadcast to be recorded.

However, when trying to use two (2) sets of descramblers within one (1) set of receiver, for the user, it is necessary to obtain two (2) sets of the descramblers, for each one contract of the charged channels. In general, one (1) set of the descrambler may be used for each one of the contracts, therefore for the user to obtain the descrambler, additionally, there is brought about a time or troublesome for applying an application, being different from a general contract in the contents thereof, to the broadcasting business company. Also, from a viewpoint of reducing the material costs of the broadcast receiver, it is desirable to bring a resource, i.e., the one (1) descrambler, to be used, effectively, depending on the condition, such as, viewing or recording of the broadcast, with mounting one (1) set of a connection mechanism between the descramble while mounting the two (2) sets of the tuners and/or the decoders thereon.

In this manner, in case where the broadcast receiver has a function of being receivable two (2) broadcasts, at the same time, and it is constructed to have only one (1) descrambler, there is brought about a problem, i.e., how the control should be done on the TS, effectively, within an inside of the broadcast receiver, in particular, in dissolving the scramble (i.e., descrambling) thereof with using the descrambler, depending on the condition thereof, i.e., viewing and/or recording thereof.

According to the present embodiment, within the broadcast receiver, having the function of being receivable two (2) broadcasts, at the same time, and being constructed so that only one (1) set of the descrambler can be connected with, there is disclosed a receiver for achieving a function of enabling a scramble broadcast and a non-scramble broadcast to be viewed, at the same time, on a two (2) screen display, a function of enabling one of the scramble broadcast and the non-scramble broadcast to be viewed while the other to be recorded, at the same time, and a function of enabling to a one scramble broadcast to be viewed and to be recorded, at the same time.

Hereinafter, according to the present embodiment, for the user, by connecting one (1) set of descrambler with the broadcast receiver, it is possible to view the scramble broadcast and the non-scramble broadcast on the two (2) screen display, at the same time, to view one of the scramble broadcast and the non-scramble broadcast while recording the other, and also to view and record one (1) scramble broadcast at the same time.

### <Embodiment 1>

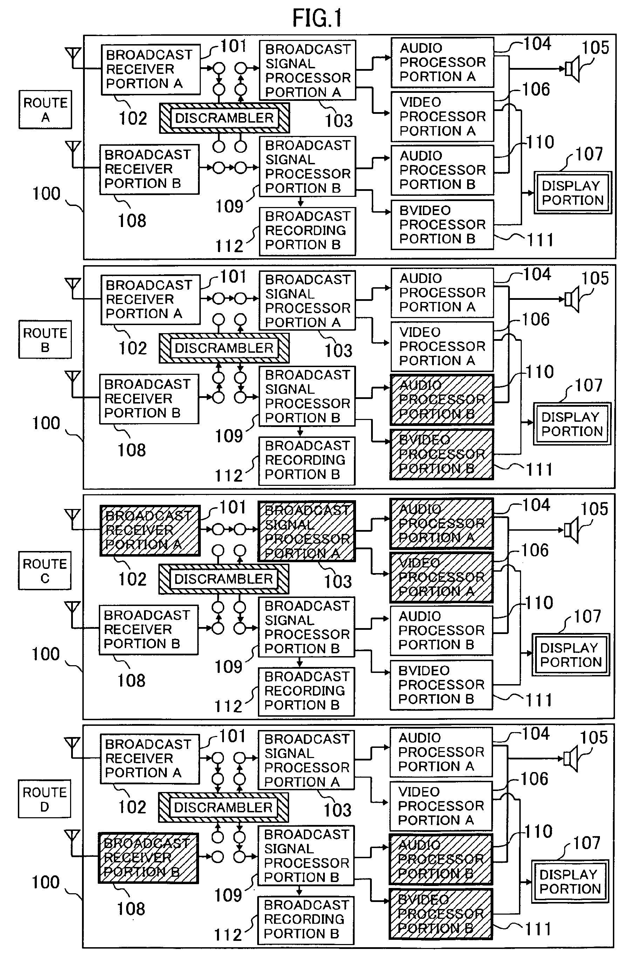

The broadcast receiver 100, according to the present embodiment, is a receiver for enabling to receive two (2) broadcasts at the same time, and as is shown in FIG. 1, it comprises a broadcast receiver portion A 101, a descrambler 102, a broadcast signal processor portion A103, an audio processor portion A 104, a speaker 105, a video processor portion A 106, a display portion 107, a broadcast receiver portion B 108, a broadcast signal processor portion B109, an audio processor portion B 110, a video processor portion B 111 and a broadcast recording portion 112.

The broadcast receiver portion A 101 and the broadcast receiver portion B 108 are circuitry, each for receiving the desired broadcast data by an antenna or through a cable, and upon basis of the signals received, for restoring or decoding the data that can be processed within a digital broadcast signal processor portion 103, which will be mentioned later.

The descrambler 102 is an external equipment of the broadcast receiver 100, and it is connected with the broadcast receiver 100 through a predetermined interface, so that the broadcast receiver 100 can obtain the broadcast signal, which is dissolved the scramble (i.e., descrambled signal), by receiving the broadcast signal through that interface.

The broadcast signal processor portion A 103 and the broadcast signal processor portion B 109 input the broadcast data obtained from the broadcast receiver portion A 101 and the broadcast receiver portion B 108, and divide audio data and video data, which are contained in that data, respectively, and thereby outputting the data after converting them into a data format, which can be processed within the audio processor portion A 104 and the audio processor portion B 110 and the video processor portion A 106 and the video processor portion B 111.

The audio processor portion A 104 and the audio processor portion B 110 output the audio data, which is supplied from the broadcast signal processor portion A 103 and the broadcast signal processor portion B 109, to the speaker 105.

The speaker 105 converts the audio data, which are supplied from the audio processor portion A 104 and the audio processor portion B 110, into a voice or sound, to be emitted therefrom.

The video processor portion A 106 and the video processor portion B 111 convert the video data, which are supplied from the broadcast signal processor portion A 103 and the broadcast signal processor portion B, into the form that can be processed within the display portion 107, and outputted therefrom.

The display portion 107 is built up with a display panel, a panel controller circuit and a panel control driver, for example, and displays the video, which made up with the data supplied from the video processor portion A 106 and the video processor portion B 111, on the display panel.

The broadcast recording portion 112 is built up with a hard disk drive or/and a flash memory, etc., and records the broadcast data, which is outputted from the broadcast signal processor portion B 109.

Also, in FIG. 1, the connection method or manner and/or the signal route, for each of portions building up the broadcast receiver 100 mentioned above, depending on the conditions of the broadcast receiving and the recording, which will be mentioned later, are shown by "Route A", "Route B", "Route C" and "Route D", respectively.

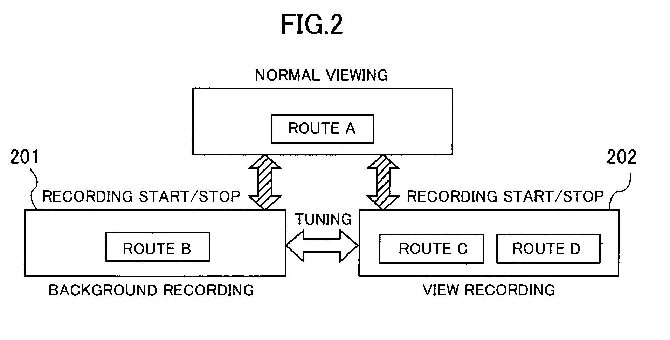

FIG. 2 shows therein correspondences between the condition of the broadcast receiving and the recording of the broadcast receiver 100, and each of the routes, i.e., "Route A", "Route B", "Route C" and "Route D" mentioned above. Normally, a viewing 200 is in a normal viewing condition of receiving/reproducing the broadcast, and the signal route of the broadcast receiver 100 is the "Route A" under this normal viewing 200. A recording of a program while viewing other program different (hereinafter, being called "a background recording") 201 is the condition of recording the different broadcast while receiving/reproducing a certain broadcast, and the signal route of the broadcast receiver 100 is the "Route B" under the background recording 201. A recording while viewing a certain broadcast different (hereinafter, being called "a view recording") 202 is the condition of recording a certain broadcast while viewing the same broadcast, and the signal route of the broadcast receiver 100 is the "Route C" or "Route D" under the view recording 202. However, both the "Route C" and "Route D" are the signal routes for enabling to achieve the condition of the same view recording 202, and therefore there is no difference between those signal routes.

Next, the operations of the broadcast receiver 100 having the structures mentioned above will be explained by referring to the flowcharts shown in FIGs. 1, 2, 3 and 4.

The broadcast receiver 100 has a function of receiving/reproducing the broadcast, and a function of recording the broadcast. Also, it has a function of receiving two (2) broadcast at the same time, and a function of recording other program while receiving/reproducing a certain program.

First of all, explanation will be made on the operation for receiving/reproducing the broadcast by the broadcast receiver 100, by referring to FIG. 1.

It is assumed that a user instructs a start of the receiving/reproducing to the broadcast receiver 100, through operation with using a remote controller, etc., which is not shown in the figure.

Responding to the instruction mentioned above, the broadcast receiver portion A 101 restores or decode the data, which can be processed within the descrambler 102, from the signal obtained by the antenna and through the cable, and transmits them to the descrambler 102. The descrambler 102 dissolves the scramble (i.e., descramble) of the data mentioned above, and transmits them to the broadcast receiver 100. The broadcast receiver 100 receiving the data, which is dissolved the scramble (i.e., descrambled), separates or divides the video data and/or the audio data contained within the data received, within the broadcast signal processor portion A 103, and those signals are converted into the predetermined video signal and audio signal, respectively, to be outputted. Also, at this instance, synchronization is obtained between the output timings of those signals, so that the video signal and the audio signal are outputted responding to each other.

The audio processor portion A104 converts the audio signal received from the broadcast signal processor portion A 103 into a signal suitable for an input of the speaker 105, to be outputted. With doing this, the voices are outputted from the speaker 105.

On the other hand, the video processor portion A 106 converts the video signal received from the broadcast signal processor portion A 103 into a signal suitable for an input of the display portion 107, to be outputted. With doing this, the video is outputted from the display portion 107.

Also, within the broadcast receiver portion B 108, the broadcast signal processor portion B 109, the audio processor portion B 110 and the video processor portion B 111, the similar processing can be made, and therefore the broadcast receiver 100 is able to receive/reproduce two (2) broadcast at the same time.

Furthermore, through transmitting the data, which the broadcast signal processor portion B 109 receives from the broadcast receiver portion B, to the broadcast recording portion 112, the data mentioned above can be recorded within the broadcast recording portion 112, and through reading out the data mentioned above, depending on the necessity thereof, by the broadcast signal processor portion B, the broadcast can be recorded/reproduced.

With the series of operations mentioned above, the receiving/reproducing of the digital broadcast is conducted within the broadcast receiver 100.

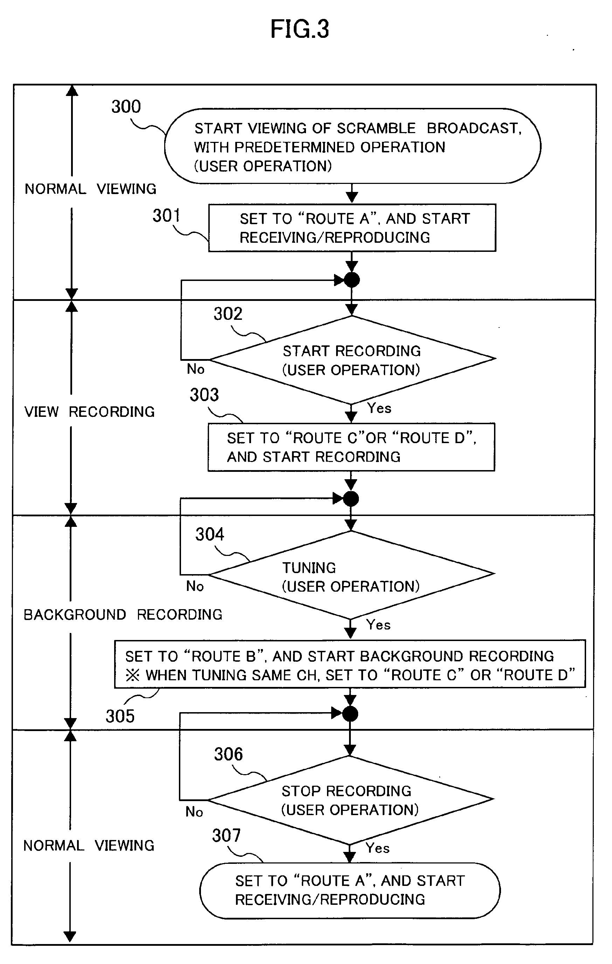

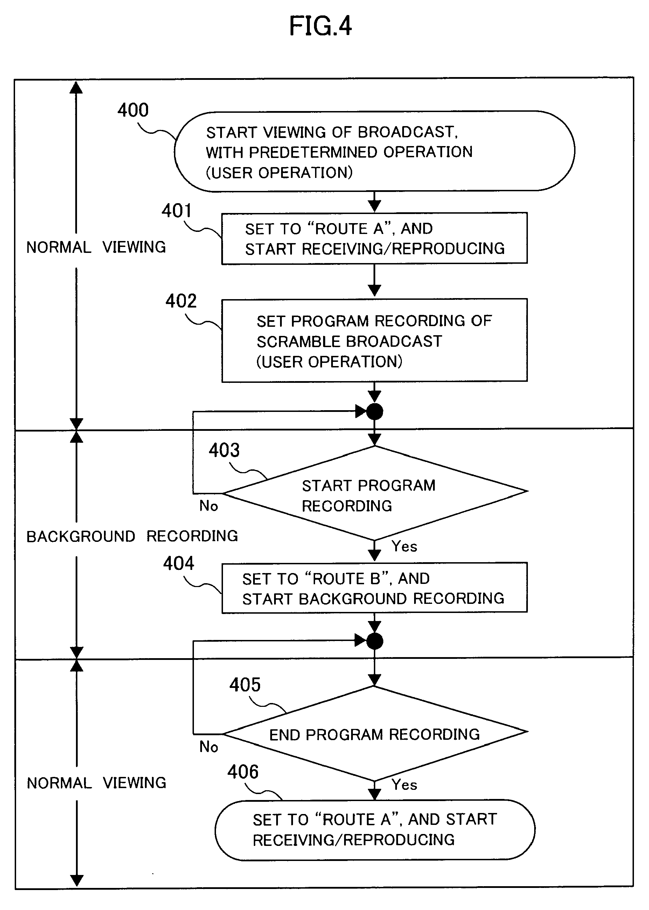

Next, explanation will be made on the details of operations for determining the signal route, when achieving each function, i.e., the normal viewing 200, the background recording 201 and the view recording 202, by referring to the flowcharts shown in FIGs. 3 and 4.

First of all, the user turns an electric power of the broadcast receiver 100 ON through a predetermined operation, so as to instructs the broadcast receiver 100 to start the normal viewing 200 (step 300) . In this instance, it is assumed that the broadcast is the scramble broadcast, which the user tries to view.

Under the normal viewing 200, the broadcast receiver 100 builds up the signal route of the "Route A", and conducts the receiving/reproducing through the mechanism or operations mentioned previously (step 301).

Next, it is assumed that the user instructs a start of recording (step 302). With the instruction mentioned above, the broadcast receiver 100 is in the condition of the view recording 202, and the signal route is turned into the structure of the "Route C" or "Route D" (step 303). Under the "Route C" or "Route D", it is in such structures that the scramble broadcast received within either the broadcast receiver portion A or the broadcast receiver portion B is dissolved the scramble thereon (i.e., descrambled) within the descrambler 102. Under the "Route C", it is in such structures that the data dissolved the scramble thereon (i.e., descrambled) is received within the broadcast signal processor portion B, so as to conduct the receiving/reproducing process with using the audio processor portion B 110 and the video processor portion B111, and also to conduct the recording within the broadcast recording portion 112. On the other hand, under the "Route D", it is in such structures that the data dissolved the scramble thereon (i.e., descrambled) is received by both the broadcast signal processor portion A and the broadcast signal processor portion B, so as to use the audio processor portion A 104 and the video processor portion A 106 for the receiving/reproducing, and also to conduct the recording by means of the broadcast signal processor portion B 109 and the broadcast recording portion 112. Both, the "Route C" and the "Route D" are the structures for enabling to record the scramble broadcast while receiving/reproducing it simultaneously.

Next, it is assumed that the user instructs a selection or tuning of the program, which she/he wished to view, under the condition that the user continues the recording (step 304). At this time, the broadcast receiver 100 receiving that instruction uses the descrambler 102, giving a priority to the program that she/he wishes to view rather than that she/he wished to record. The broadcast receiver 100 turns into the condition of the background recording 201, i.e., building up the "Route B" upon basis of the specification mentioned above (step 305). Under the "Route B", the signal received within the broadcast receiver portion B 108 is recorded into the broadcast recording portion 112 via the descrambler 102. On the other hand, since the view program is the signal received within the broadcast receiver portion A 101, then that signal is conducted with the receiving/reproducing processes after the broadcast signal processor portion A 103, but not passing through the descrambler.

For this reason, even in case where the CI card is able to descramble only one (1) signal, it is possible to descramble the program to be recorded prior to the view program, appropriately, and therefore this brings about superior usability or operability for the user and enables effective use of only one (1) resource, i.e., the descrambler. However, the above-mentioned signal to be descrambled may be the program to be viewed through setup by the user.

However, following the step 305, the user makes the selection or tuning of the program further, and if she/he selects the program same to that under the recording, then the broadcast receiver 100 changes the route determination to "Route C" or "Route D". With this, it is possible to view the scramble broadcast while recording thereof.

Next, it is assumed that the user instructs stoppage of the recording (step 306). With the instruction mentioned above, the broadcast receiver 100 changes the route determination to the structure of the "Route A", again, thereby turning back to the normal viewing 200.

The broadcast receiver 100 conducts a series of operations, i.e., building up the "Route A" under the condition of the normal viewing 200, the "Route C" or "Route D" under the condition of the view recording 202, and the "Route B" under the condition of the background recording 201, depending upon the instruction by the user.

Next, explanation will be made on the operations when the user sets up a program recording, i.e., for starting the recording at the time, which is set up in advance, by referring to the flowchart shown in FIG. 4.

First of all, the user turns the electric power of the broadcast receiver 100 ON through the predetermined operation, and then instructs the broadcast receiver 100 to start the normal viewing 200 (step 400).

Under the condition of the normal viewing 200, the broadcast receiver 100 builds up the signal route of the "Route A", thereby conducting receiving/reproducing through the mechanism or operations mentioned previously (step 401).

Next, it is assumed that the user sets up the program recording of the scramble broadcast thought the predetermined operations (step 402).

It is assumed that it reaches to the time, at which the program recording is set up, and at this time the user is viewing a program different from that, upon which the user set up the program recording (step 403). The broadcast receiver 100 is in the condition of the background recording 201, so as to build up the signal route of the "Route B", and then starts the recording through the mechanism or operations mentioned previously (step 404). Under the "Route B", the signal received within the broadcast receiver portion B 108 is recorded into the broadcast recording portion 112 passing trough the descrambler 102.

Further, when it reaches to the time when the program recording will end (step 405), the broadcast receiver 100 stops the recording, and builds up the signal route of the "Route A", again, and thereby turning into the condition of the normal viewing 200.

In this manner, the broadcast receiver 100 conducts a series of operations, i.e., building up the "Route A" under the condition of the normal viewing 200 and the "Route B" under the condition of the background recording 201, when the user makes the program recording of the scramble broadcast, and in case when the user is viewing a non-scramble broadcast, it is possible to record the scramble broadcast differing from the program to be viewed, at the same time of that viewing.

With such the series of operations mentioned above, for the user, by connecting a certain one (1) set of descrambler with the broadcast receiver, it is possible to view the scramble broadcast and the non-scramble broadcast on the two (2) screen display, at the same time, to view one of the scramble broadcast and the non-scramble broadcast while recording the other, and also to view and record one (1) scramble broadcast at the same time.

However, in the embodiment mentioned above, the broadcast recording portion 112 is connected with the broadcast signal processor portion B 109; however, the broadcast recording portion 112 may be connected with the broadcast signal processor portion A 103, or with both, the broadcast signal processor portion A 103 and the broadcast signal processor portion B 109, and in any case, when recording the scramble broadcast, the received data is supplied to the broadcast signal processor portion, which outputs the data to be recorded to the broadcast recording portion 112, from the descrambler 102 in the structures thereof.

### <Embodiment 2>

Next, explanation will be made about an embodiment 2 of the present invention. With the present embodiment, explanation will be made on a method for achieving the operation equal to that of the embodiment 1, but without exchanging the routes for connecting the descrambler 102, within the broadcast receiver 100 of the embodiment 1.

Hereinafter, explanation will be made on the present embodiment upon basis of drawings. Also, hereinafter, the equivalents to those of the previous embodiment are attached with the same reference numerals, and the explanation thereof will be omitted for avoiding the duplication thereof.

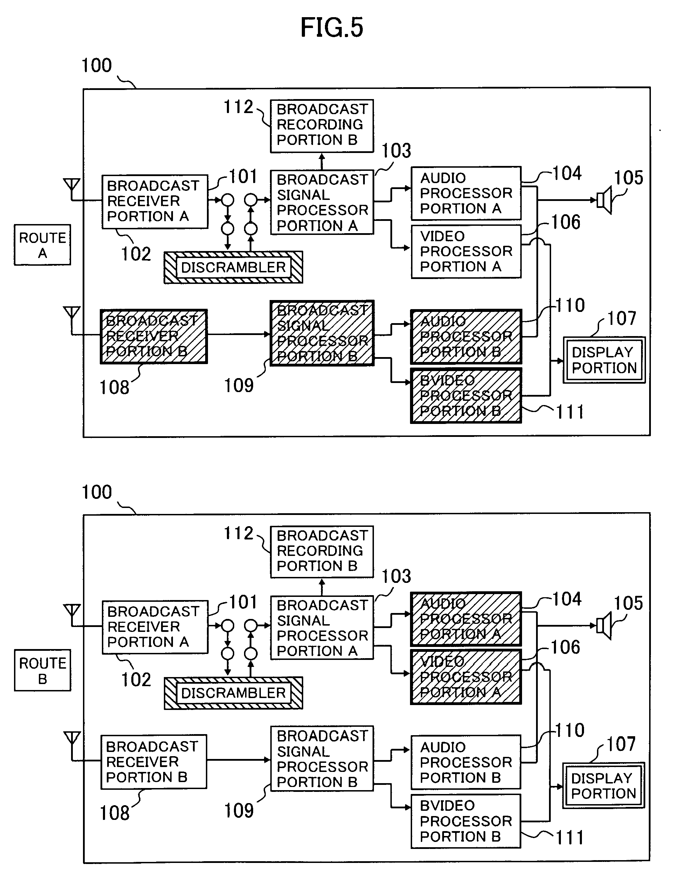

Within the broadcast receiver 100 of the embodiment 2 shown in FIG. 5, differing from that of the embodiment 1 shown in FIG. 1, input/output signals of the descrambler 102 are constructed to fix to the broadcast receiver portion A 101 and the broadcast signal processor portion A 103, and the broadcast receiver portion B 108 and the broadcast signal processor portion B 109 do no signal transmission between the descrambler 102.

Also, the broadcast recording portion 112 is connected to the broadcast signal processor portion A 103, and therefore, when recording the broadcast program, the data is recorded, which is outputted by the broadcast signal processor portion A 103.

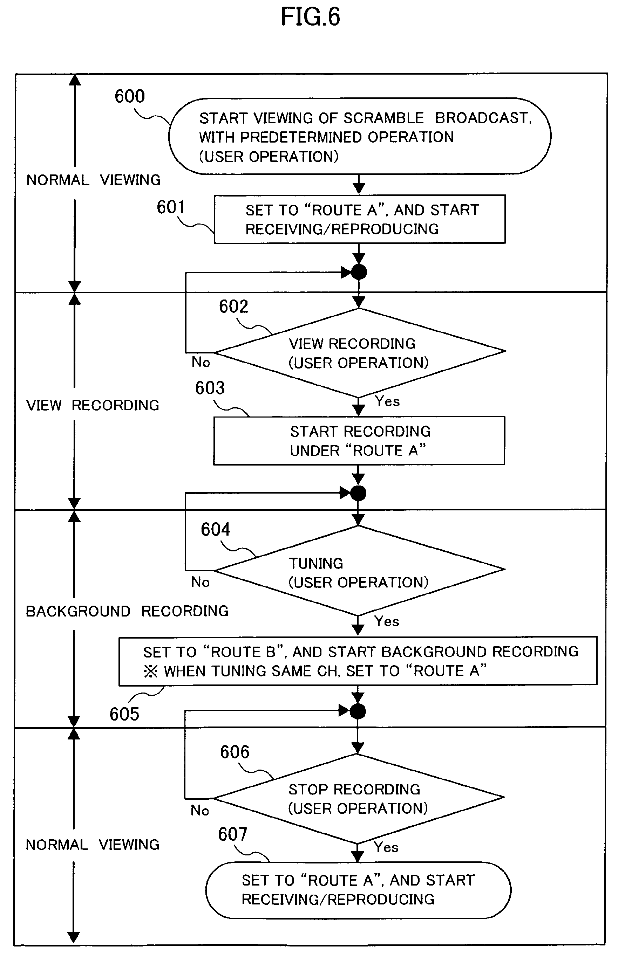

Hereinafter, explanation will be made on the operations of the present embodiment, by referring to the flowchart shown in FIG. 6. According to the present embodiment, the broadcast receiver 100 is for achieving the equal operations of the embodiment 1, but with the structures of not exchanging the routes for connecting the descrambler 102.

First of all, the user turns the electric power of the broadcast receiver 100 ON through the predetermined operation, and instructs the broadcast receiver 100 to start the normal viewing 200 (step 600) . In this instance, it is assumed that the broadcast which the user wishes to view is the scramble broadcast.

Under the normal viewing 200, the broadcast receiver portion 100 builds up the signal route of the "Route A", and thereby conducts receiving/reproducing through the mechanism or operations mentioned previously (step 601).

Next, it is assumed that the user instructs a start of recording (step 602). With the instruction mentioned above, the broadcast receiver 100 is in the condition of the view recording 202, but the signal route remains in the structure of the "Route A", and the broadcast signal processor portion A 103 starts recording into the broadcast recording portion 112 (step 603).

Next, it is assumed that the user instructs a selection or tuning of the program to be viewed, under the condition of continuing the recording (step 604). In this time, as a presumption, it is assumed that the broadcast receiver 100 receiving that instruction is in the specification of using the descrambler 102 giving a priority to the program to be recorded than the program to be viewed. The broadcast receiver 100 is in the condition of the background recording 201, and builds up the "Route B" upon basis of the specification mentioned above (step 605) . Also, accompanying with the selection of tuning of the program, the signals to be outputted to the speaker 105 and the display portion 107 upon receiving/reproducing are changed to the signals, which are outputted by the audio processor portion B 110 and the video processor portion B 111. On the "Route B", the signal received within the broadcast receiver portion B 108 is conducted with the receiving/reproducing processes after the broadcast signal processor portion B 108, but without passing through the descrambler. Accordingly, since that signal is not dissolved the scramble thereon (i.e., non-descrambled), it is impossible to receive/reproduce the scramble broadcast as the program to be viewed, but it is possible to receive/reproduce the non-descramble broadcast.

Further, following to the step 605, if the user makes the selection or tuning of the program, and if she/he selects the program, which is same to that under the recording, the broadcast receiver 100 changes the route setup to the "Route A". With this, it is possible to view the scramble broadcast during the recording.

Next, it is assumed that the user instruct stoppage of the recording (step 606). Upon the instruction mentioned above, the broadcast receiver 100 changes the route setup into the "Route A", again, and turns back to the normal viewing 200.

The broadcast receiver 100 conducts a series of operations: i . e. , building up the "Route A" under the condition of the normal viewing 200 and the view recording 202, and the "Route B" under the condition of the background recording 201.

With this, the broadcast receiver 100 is able to achieve the operations equal to that of the embodiment 1, within the structures of not exchanging the routes for connecting the descrambler 102.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims, as interpreted by the description and drawings.

## Claims

1. A receiving apparatus, for receiving a program signal including a coded signal therein, comprising:
a first receiver portion, which is configured to receive said program signal;
a second receiver portion, which is configured to receive said program signal;
an output portion, which is configured to output the program signal, which is received by said first receiver portion or said second receiver portion, to an external equipment;
an input portion, which is configured to input a signal from said external equipment;
a recording portion, which is configured to record said program signal; and
a display portion, which is configured to display said program signal, wherein
the program signal received by said second receiver portion is outputted to said external equipment, and the program signal inputted from said input portion is recorded in said recording portion, when said first receiver portion and said second receiver portion receive the coded program signal.

2. The receiving apparatus, as described in the claim 1, further comprising:
a first signal processor portion, which is configured to process the program signal received by said first receiver portion; and
a second signal processor portion, which is configured to process the program signal inputted from said input portion.

3. The receiving apparatus, as described in the claim 2, further comprising:
a display portion, which is configured to display the program signal from said first signal processor portion or said second signal processor portion.

4. The receiving apparatus, as described in the claim 1, wherein said external equipment is a descrambler, which is configured to descramble coding of the signal, which is outputted from said output portion.

5. The receiving apparatus, as described in the claim 2, further comprising:
a display portion, which is configured to display said program signal, wherein
when the program signal received by said first receiver portion and the program signal received by said second receiver portion are signals relating to a same program,
the program signal from said second signal processor portion is displayed on said display portion, while recording the program signal from said second signal processor portion within said recording portion.

6. The receiving apparatus, as described in the claim 2, wherein
when the program signal received by said first receiver portion and the program signal received by said second receiver portion are signals relating to a same program,
one of the program signals, which is received by said first receiver portion or said second receiver portion, is outputted from said output portion, and the program signal inputted from said input portion is outputted to said first signal processor portion and said second signal processor portion.

7. A receiving apparatus, for receiving a program signal including a coded signal therein, comprising:
a receiver portion, which is configured to receive said program signal;
an output portion, which is configured to output the program signal received by said receiver portion, to an external equipment;
an input portion, which is configured to input a signal from said external equipment;
a signal processor portion, which is configured to process the program signal inputted from said input portion;
a recording portion, which is configured to record said program signal processed within said signal processor portion; and
a display portion, which is configured to display said program signal processed within said signal processor portion.

8. A receiving apparatus, for receiving a program signal including a coded signal therein, comprising:
a receiver portion, which is configured to receive said program signal;
an output portion, which is configured to output the program signal received by said receiver portion, to an external equipment;
an input portion, which is configured to input a signal from said external equipment;
a first signal processor portion, which is configured to process the program signal inputted from said input portion;
a second signal processor portion, which is configured to process the program signal inputted from said input portion;
a display portion, which is configured to display the program signal processed within said first signal processor portion;
a recording portion, which is configured to record said program signals processed within said signal processor portions; and
a display portion, which is configured to display said program signals processed within said signal processor portions.

9. A receiving method, for receiving a program signal including a coded signal therein, comprising the following steps of:
a first receiving step for receive said program signal;
a second receiving step for receive said program signal;
an outputting step for outputting the program signal, which is received in said first receiving step or said second receiving step, to an external equipment;
an inputting step for inputting a signal from said external equipment;
a recording step for recording said program signal; and
a display step for displaying said program signal, wherein
the program signal received in said second receiving step is outputted to said external equipment, and the program signal inputted from said inputting step is recorded in said recording step, when receiving the coded program signal in said first receiving step and said second receiving step receive.
